(19) Europäisches Patentamt
European Patent Office
Office européen des brevets

(11) **EP 3 914 646 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **19708270.4**

(22) Anmeldetag: **26.02.2019**

(51) Internationale Patentklassifikation (IPC):
**C08L 31/02** (2006.01)    **C08L 63/00** (2006.01)
**C09D 131/02** (2006.01)   **C09D 163/00** (2006.01)
**C09J 131/02** (2006.01)   **C09J 163/00** (2006.01)

(52) Gemeinsame Patentklassifikation (CPC):
(C-Sets verfügbar)
**C08G 59/245; C08L 31/04; C08L 63/00;**
**C09D 131/04; C09D 163/00; C09J 131/04;**
**C09J 163/00**                              (Forts.)

(86) Internationale Anmeldenummer:
**PCT/EP2019/054693**

(87) Internationale Veröffentlichungsnummer:
**WO 2020/173547 (03.09.2020 Gazette 2020/36)**

(54) **VERNETZBARE, IN WASSER REDISPERGIERBARE POLYMERPULVER-ZUSAMMENSETZUNGEN**

CROSS-LINKABLE, POLYMER-POWDER COMPOSITIONS RE-DISPERSIBLE IN WATER

COMPOSITIONS PULVÉRULENTES POLYMÈRES RÉTICULABLES, REDISPERSIBLES DANS L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.12.2021   Patentblatt 2021/48**

(73) Patentinhaber: **Wacker Chemie AG**
**81737 München (DE)**

(72) Erfinder:
• **MELCHIN, Timo**
  **84561 Mehring (DE)**
• **DIETRICH, Ulf**
  **84489 Burghausen (DE)**
• **WÖLFLE, Heimo**
  **83278 Traunstein (DE)**

(74) Vertreter: **Ege, Markus et al**
**Wacker Chemie AG**
**Hanns-Seidel-Platz 4**
**81737 München (DE)**

(56) Entgegenhaltungen:
WO-A2-2010/086217     CN-A- 108 249 880
DE-A1- 10 004 319     US-A- 4 009 224

(52) Gemeinsame Patentklassifikation (CPC): (Forts.)

C-Sets
**C08L 31/04, C08L 63/00;**
**C08L 63/00, C08L 31/02;**
**C09D 131/04, C08L 63/00;**
**C09D 163/00, C08L 31/02;**
**C09J 131/04, C08L 63/00;**
**C09J 163/00, C08L 31/02**

**Beschreibung**

Die Erfindung betrifft vernetzbare, in Wasser redispergierbare Polymerpulver-Zusammensetzungen enthaltend Polymere und Epoxid-Verbindungen, Verfahren zu deren Herstellung sowie deren Verwendung, insbesondere in Beschichtungs- oder Klebemitteln, beispielsweise für den Baubereich.

In Wasser redispergierbare Polymerpulver (Dispersionspulver) werden im Allgemeinen durch Trocknen wässriger Polymerdispersionen erhalten. Das Trocknen erfolgt häufig in Gegenwart von Trocknungshilfsmittel, im Allgemeinen Schutzkolloiden, wodurch sich eine Hülle aus Trocknungshilfsmittel um die Polymerteilchen ausbilden kann. Beim Trocknungsvorgang können Trocknungshilfsmittel verhindern, dass die Polymerteilchen irreversibel verkleben. Beim Dispergieren von Dispersionspulvern in Wasser löst sich die Trocknungshilfsmittel-Matrix wieder auf, so dass in der wässrigen Dispersion die Polymerpartikel wieder freigesetzt werden und darin mit der Partikelgröße der Ausgangsdispersion vorliegen.

Derartige Dispersionspulver werden in vielerlei Anwendungen eingesetzt, beispielsweise in Beschichtungs- oder Klebemittel, insbesondere in bauchemischen Produkten, wie Fliesenkleber, Spachtelmassen, Verlaufsmassen, Wärmedämmverbundsysteme oder Fugenmörtel. Von Vorteil ist, dass Dispersionspulver in vorgefertigten, lagerfähigen Trockenmischungen, gegebenenfalls zusammen mit hydraulischen Bindemitteln, wie Zement, bereitgestellt werden können, die erst unmittelbar vor ihrer Anwendung durch Wasserzugabe in die gebrauchsfertige Mischung überführt werden. Derartige Trockenmischungen können im Vergleich zu pastösen Systemen mit geringerem Aufwand transportiert werden (ohne Wasseranteil) und kommen bei der Lagerung ohne Zusatz von Konservierungsmitteln aus.

Mit Dispersionspulvern kann die mechanische Festigkeit und Haftung der damit modifizierten bauchemischen Produkte verbessert werden. Zur weiteren Steigerung der mechanischen Festigkeit können zudem vernetzende Zusätze eingesetzt werden.

Aus einer Reihe von Schriften sind wässrige, mit Epoxidharz modifizierte Polymerdispersionen bekannt. Solche Systeme neigen zur vorzeitigen Vernetzung oder erleiden anderweitige, ungewollte chemische Umsetzungen und verfügen deswegen bei der Applikation nicht mehr über die notwendige Vernetzbarkeit. So beschreibt die US-A 4028294 eine Emulsionspolymerisation von ethylenisch ungesättigten Monomeren in Gegenwart von Epoxidharz, wobei zum Erhalt vernetzbarer Systeme funktionelle Comonomere einpolymerisiert wurden, welche mit dem Epoxidharz vernetzende Gruppen tragen. Laut US-A 4028294 tritt bei den für die Polymerisation gewählten Temperaturen keine vorzeitige Vernetzung ein. Die Herstellung von in Wasser redispergierbaren Polymerpulver-Zusammensetzungen wird nicht beschrieben. Die US-A 4108819 beschreibt die Copolymerisation von Vinylacetat und Ethylen in Gegenwart eines Epoxidharzes. Zur Verhinderung einer vorzeitigen Vernetzung wird bei pH 3 bis 7 polymerisiert. Der Dispersion wird dann ein Aminohärter zugegeben. Nachteilig bei diesen Verfahren ist die Gefahr der vorzeitigen Vernetzung, da sowohl Epoxidgruppen als auch Aminohärter in der wässrigen Dispersion vorliegen und daher während der Lagerung üblicherweise zumindest teilweise vernetzen. Analoge Dispersionen sind auch aus der DE 2601200 bekannt. Auch die US 6235811 B1 beschreibt wässrige, vernetzbare Polymerdispersionen enthaltend Vinylacetat-(Co)polymerlatex, Epoxidharz und Isophorondiamin. Auch hier liegen Epoxidharz und Aminvernetzer nebeneinander in flüssiger Phase vor, was bei Lagerung zu vorzeitiger Vernetzung führt. Die US-A 4690988 beschreibt die Herstellung polymermodifizierter, vinylisierter Epoxidharze, indem zunächst ein Polyepoxid mit einer ethylenisch ungesättigten Carbonsäure umgesetzt wird und dann in Gegenwart des vinylisierten Epoxidharzes weitere Monomere polymerisiert werden (vinyl-functional chain-extending monomers). Die so erhaltenen Polymerisate werden durch Zugabe von (Hydro)peroxiden vernetzt. Eine vorzeitige Vernetzung ist bei solchen Systemen nur schwerlich auszuschließen. In Wasser redispergierbare Polymerpulver sind in all diesen Schriften nicht beschrieben.

Ein vernetzbares Dispersionspulver wird gemäß US 2001/0024644 durch Copolymerisation von ethylenisch ungesättigten Monomeren und epoxidfunktionellen Monomeren in wässrigem Medium, anschließende Trocknung der Dispersion und nachträgliche Zugabe von Polyepoxid erhalten. Nachteilig ist, dass die Vernetzungseffizienz hier relativ niedrig ist. Zudem enthalten die Dispersionspulver mit 1 bis 50 Gew.-%, insbesondere 1 bis 15 Gew.-%, bezogen auf das Gesamtgewicht aus Copolymeren und Polyepoxid, nur geringe Mengen an Polyepoxid. Die EP 0896029 A1 beschreibt eine Copolymerisation von ethylenisch ungesättigten Monomeren mit vernetzbaren Comonomeren, Trocknung der Dispersion und anschließende Zugabe von Feststoffteilchen, welche über funktionale Gruppen mit den vernetzbaren Gruppen des Copolymers vernetzen können. Aus der EP-A 723975 A1 ist ein Dispersionspulver bekannt, welches durch Copolymerisation von Styrol und/oder (Meth)acrylsäureestern mit epoxidfunktionellen Comonomeren erhalten wird. Nachteilig bei diesen Verfahren ist die Gefahr der vorzeitigen Vernetzung bei der Polymerisation in Gegenwart von vernetzbaren Comonomeren. Aus der EP 721004 A2 sind Polymerpulverzusammensetzung bekannt, welche Polymerpulver enthalten und unterschiedlichste pulverförmige, vernetzende Komponenten, welche dadurch erhalten werden, dass die jeweiligen Flüssigkeiten auf einen pulverförmigen Träger aufgetragen werden. Die pulverförmigen Komponenten werden dann miteinander vermischt. Nachteilig ist dabei das Handling eines solchen 3-Komponenten-Systems und die mangelhafte Redispergierbarkeit solcher Mischungen. Die WO2010/086217 beschreibt vernetzbare, in Wasser redispergierbare Polymerpulver-Zusammensetzungen enthaltend Epoxidharz sowie Basispolymerisate. Fokus der Basispolymerisate liegt auf Styrolacrylaten. Der Anteil der Epoxidharze an den Polymerpulver-Zusammensetzungen beträgt 1 bis 50 Gew.-%, insbesondere 5 bis 30 Gew.-%, bezogen auf die Basispolymerisate. Die WO2018/220133 offenbart Zusammensetzungen, die mindestens 10 Gew.-% Zement, Epoxidgruppen tragende Verbindungen, Polymere, insbesondere Styrolacrylate, Füllstoffe und gegebenenfalls Additive enthalten. Die Epoxid-gruppen tragenden Verbindungen und die Polymere können auch in Form von Vormischungen bereitgestellt werden, in denen allerdings ein größerer Gewichtsanteil an Polymeren als an Epoxid-Verbindungen enthalten ist.

Vor diesem Hintergrund bestand die Aufgabe, vernetzbare, in Wasser redispergierbare Polymer-Zusammensetzungen mit hohem Gehalt an Epoxid-Gruppen tragenden Verbindungen zur Verfügung zu stellen, welche eine hohe Reaktivität und zugleich eine hohe Lagerstabilität aufweisen sollen; insbesondere sollte bei der Herstellung und Lagerung der Polymer-Zusammensetzungen eine vorzeitige Vernetzung möglichst ausgeschlossen sein. Solche Polymer-Zusammensetzungen sollten bei Einsatz in bauchemischen Produkten auch ohne Zusatz von mineralischen Bindemitteln möglichst zu wasserfesten Filmen führen. Hohe Gehalte an Epoxid-Gruppen tragenden Verbindungen verbunden mit hoher Reaktivität sowie hohe Lagerstabilität stellen extreme und zueinander konträre Anforderungen dar.

Überraschenderweise wurde diese Aufgabe mit vernetzbaren Polymerpulver-Zusammensetzungen gelöst, die hohe Mengen an Epoxid-Gruppen tragenden Verbindungen in Kombination mit erfindungsgemäßen Vinylesterpolymeren enthalten.

Ein Gegenstand der Erfindung sind vernetzbare, in Wasser redispergierbare Polymerpulver-Zusammensetzungen (vernetzbare Polymerpulver-Zusammensetzungen) enthaltend ein oder mehrere Schutzkolloid-stabilisierte Vinylesterpolymere,

ein oder mehrere Epoxid-Gruppen tragende Verbindungen (Epoxid-Verbindungen) und gegebenenfalls ein oder mehrere, mit den Epoxid-Verbindungen vernetzende Härter, wobei die Vinylesterpolymere keine Epoxid-funktionellen Monomer-Einheiten enthalten, und die vernetzbaren Polymerpulver-Zusammensetzungen ≥ 51 Gew.-%, bezogen auf das Gesamtgewicht der Vinylesterpolymere, an einer oder mehreren Epoxid-Verbindungen enthalten und Mischungen aus den Schutzkolloid-stabilisierten Vinylesterpolymeren und den Epoxid-Gruppen tragenden Verbindungen Glasübergangstemperaturen Tg von -40°C bis +20°C, bestimmt mittels Differential Scanning Calorimetry, haben.

Unter Epoxid-Verbindungen sind allgemein nicht radikalisch polymerisierbare Epoxidverbindungen mit mindestens zwei Epoxid-gruppen pro Molekül zu verstehen. Die Epoxid-Verbindungen können aliphatischer, cycloaliphatischer oder aromatischer Natur sein.

Bevorzugte Epoxid-Verbindungen sind Epoxidharze. Ein Beispiel hierfür sind Epoxid-Verbindungen vom Bisphenol-A-Typ, das heißt Kondensationsprodukte von Bisphenol-A und Epichlorhydrin oder Methylepichlorhydrin. Geeignet sind auch Epoxidharze auf Basis von Bisphenol-F, welche im Allgemeinen eine Mischung von Bisglycidyloxyphenylmethanen enthalten. Weitere Beispiele sind aliphatische Epoxidverbindungen wie Glycidylether von aliphatischen Polyolen, insbesondere der Butyldiglycidylether; cycloaliphatische Epoxidharze wie Vinylcyclohexandioxid, Dicyclopentadiendioxid und 3,4-Epoxy-6-methyl-cyclohexyl-methyl; und heterocyclische Epoxidverbindungen wie Triglycidyl-Isocyanurat. Derartige Epoxidharze sind im Handel erhältlich, beispielsweise die Bisphenol-A- und Bisphenol-F-Typen als Epilox[R]-Harze.

Besonders bevorzugt werden die Epoxidharze vom Bisphenol-A-Typ und Bisphenol-F-Typ oder deren Mischungen.

Beispiele für weitere Epoxid-Verbindungen sind Bisglycidyloxyphenylmethan, Butyldiglycidylether, Vinylcyclohexandioxid, Dicyclopentadiendioxid, 3,4-Epoxy-6-methyl-cyclohexyl-methyl und Triglycidyl-Isocyanurat.

Die Epoxid-Verbindungen sind in den vernetzbaren Polymerpulver-Zusammensetzungen zu vorzugsweise ≥ 80 Gew.-%, besonders bevorzugt ≥ 100 Gew.-% und am meisten bevorzugt ≥ 120 Gew.-% enthalten, bezogen auf das Gesamtgewicht der Vinylesterpolymere oder bezogen auf das Gesamtgewicht der Vinylesterpolymere und der weiteren Polymerisate. Die Epoxid-Verbindungen sind in den vernetzbaren Polymerpulver-Zusammensetzungen zu vorzugsweise 51 bis 300 Gew.-%, besonders bevorzugt 80 bis 200 Gew.-% bezogen auf das Gesamtgewicht der Vinylesterpolymere oder bezogen auf das Gesamtgewicht der Vinylesterpolymere und der weiteren Polymerisate.

Die Epoxid-Verbindungen sind in den vernetzbaren Polymerpulver-Zusammensetzungen zu vorzugsweise 20 bis 75 Gew.-%, besonders bevorzugt 35 bis 65 Gew.-% und am meisten bevorzugt 40 bis 60 Gew.-% enthalten, jeweils bezogen auf das Gesamtgewicht der vernetzbaren Polymerpulver-Zusammensetzungen.

Die Vinylesterpolymere basieren vorzugsweise auf einem oder mehreren Vinylestern von unverzweigten oder verzweigten Alkylcarbonsäuren mit 1 bis 15 C-Atomen und gegebenenfalls einem oder mehreren Monomeren ausgewählt aus der Gruppe umfassend Methacrylsäureester und Acrylsäureester von Alkoholen mit 1 bis 15 C-Atomen, Vinylaromaten, Olefine, Diene und Vinylhalogenide, wobei die Vinylesterpolymere keine Epoxid-funktionellen Monomer-Einheiten enthalten.

Die Vinylesterpolymere sind allgemein erhältlich mittels radikalisch initiierter Polymerisation in wässrigem Medium von einem oder mehreren Vinylestern und gegebenenfalls einem oder mehreren weiteren Monomeren, wobei keine Epoxid-funktionellen Monomere copolymerisiert werden.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 9 bis 13 C-Atomen (Vinylversatate), beispielsweise VeoVa9[R] oder VeoVa10[R] (Handelsnamen der Firma Resolution). Besonders bevorzugt ist Vinylacetat.

Vinylesterpolymere basieren vorzugsweise zu ≥ 50 Gew.-%, mehr bevorzugt ≥ 60 Gew.-% und besonders bevorzugt ≥ 75 Gew.-% auf Vinylestern, bezogen auf das Gesamtgewicht der Vinylesterpolymere.

Beispiele für Olefine und Diene sind Ethylen, Propylen und 1,3-Butadien. Ein geeignetes Vinylhalogenid ist Vinylchlorid.

Bevorzugte Methacrylsäureester oder Acrylsäureester sind Methylacrylat, Methylmethacrylat, Ethylacrylat, Ethylmethacrylat, Propylacrylat, Propylmethacrylat, Butylacrylat (n-, iso-, tert.-), n-Butylmethacrylat, 2-Ethylhexylacrylat, Norbornylacrylat. Besonders bevorzugt sind Methylacrylat, Methylmethacrylat, Butylacrylat und 2-Ethylhexylacrylat.

Vorzugsweise basieren die Vinylesterpolymere zu ≤ 50 Gew.-%, mehr bevorzugt ≤ 35 Gew.-% und besonders bevorzugt ≤ 25 Gew.-% auf Methacrylsäureestern oder Acrylsäureestern, bezogen auf das Gesamtgewicht der Vinylesterpolymere. Am meisten bevorzugt enthalten die Vinylesterpolymere keine Monomer-Einheit von Methacrylsäureestern und Acrylsäureestern.

Geeignete Vinylaromaten sind Styrol und Vinyltoluol. Vorzugsweise basieren die Vinylesterpolymere zu ≤ 50 Gew.-%, mehr bevorzugt ≤ 30 Gew.-% und besonders bevorzugt ≤ 20 Gew.-% auf Vinylaromaten, insbesondere Styrol, bezogen auf das Gesamtgewicht der Vinylesterpolymere. Am meisten bevorzugt enthalten die Vinylesterpolymere keine Monomer-Einheit von Vinylaromaten, insbesondere keine Monomer-Einheit von Styrol.

Die Vinylesterpolymere enthalten keine Epoxid-funktionellen Monomer-Einheiten. Vorzugsweise tragen die Vinylesterpolymere keine Epoxid-Gruppe. Vorzugsweise enthalten die Vinylesterpolymere keine Einheiten von Glycidylacrylat, Glycidylmethacrylat, Allylglycidether und Vinylglycidether. Besonders bevorzugt enthalten die Vinylesterpolymere keine Einheiten von Glycidylacrylat, Glycidylmethacrylat, Allylglycidether, Vinylglycidether, Vinylcyclohexenoxid, Limonenoxid, Myrcenoxid, Caryophyllenoxid, mit Glycidylresten im Aromaten substituierte Styrole und Vinyltoluole sowie mit Glycidresten im Aromaten substituierte Vinylbenzoate.

Gegebenenfalls können noch bis zu 10 Gew.-%, vorzugsweise 0,05 bis < 2 Gew.-%, besonders bevorzugt 0,05 bis 1 Gew.-%, jeweils bezogen auf das Gesamtgewicht des Vinylesterpolymere, Hilfsmonomere copolymerisiert sein. Am meisten bevorzugt sind keine Hilfsmonomere, insbesondere keine ethylenisch ungesättigten Mono- oder Dicarbonsäuren, copolymerisiert.

Beispiele für Hilfsmonomere sind ethylenisch ungesättigte Mono- und Dicarbonsäuren, ethylenisch ungesättigte Carbonsäureamide und -nitrile, Mono- und Diester der Fumarsäure und Maleinsäure, sowie Maleinsäureanhydrid, ethylenisch ungesättigte Sulfonsäuren wie Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane.

Bei den Vinylesterpolymeren kann es sich um Vinylester-Homopolymere oder Vinylester-Copolymere handeln. Beispiele für geeignete Vinylesterpolymere sind Polymerisate, welche erhalten werden mittels Polymerisation von Vinylacetat, Mischpolymerisation von Vinylacetat mit Ethylen, Mischpolymerisation von Vinylacetat mit Ethylen und einem oder mehreren weiteren Vinylestern wie Vinylversatat oder Vinyllaurat, Mischpolymerisation von einem oder mehreren Vinylestern, wie Vinylacetat und Vinyllaurat, Vinylchlorid und Ethylen und, Mischpolymerisation von Vinylacetat mit Ethylen und einem oder mehreren Acrylsäureester, wobei gegebenenfalls jeweils noch Hilfsmonomere copolymerisiert werden können.

Besonders bevorzugt werden Homopolymerisate von Vinylacetat; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen (Vinylversatate) wie VeoVa9[R], VeoVa10[R], VeoVa11[R]; Mischpolymerisate von Vinylacetat, 1 bis 40 Gew.-% Ethylen und vorzugsweise 1 bis 60 Gew.-% (Meth)Acrylsäureester von unverzweigten oder verzweigten Alkoholen mit 1 bis 15 C-Atomen, insbesondere Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, Butylacrylat oder 2-Ethylhexylacrylat, welche noch 1 bis 40 Gew.-% Ethylen enthalten; Mischpolymerisate mit Vinylacetat und/oder einem oder mehreren weiteren Comonomeren aus der Gruppe Vinylester mit 1 bis 12 C-Atomen im Carbonsäurerest, und 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Am meisten bevorzugte Vinylesterpolymere sind Homopolymerisate von Vinylacetat und insbesondere Mischpolymerisate bestehend aus Vinylacetat- und Ethylen-Einheiten. Vinylacetat-Ethylen-Mischpolymerisate basieren zu vorzugsweise 1 bis 30 Gew.-%, besonders bevorzugt 5 bis 20 Gew.-% und am meisten bevorzugt 8 bis 15 Gew.-% auf Ethylen, bezogen auf das Gesamtgewicht der Vinylacetat-Ethylen-Mischpolymerisate.

Die Vinylesterpolymere sind in den vernetzbaren Polymerpulver-Zusammensetzungen zu vorzugsweise 15 bis 75 Gew.-%, besonders bevorzugt 20 bis 50 Gew.-% und am meisten bevorzugt 25 bis 40 Gew.-% enthalten, jeweils bezogen auf das Gesamtgewicht der vernetzbaren Polymerpulver-Zusammensetzungen.

Neben den Vinylesterpolymeren können die vernetzbaren Polymerpulver-Zusammensetzungen ein oder mehrere weitere Polymerisate auf Basis ethylenisch ungesättigter Monomere enthalten. Die weiteren Polymerisate enthalten allgemein keine Vinylester-Einheiten, insbesondere keine Vinylacetat-Einheit, und vorzugsweise keine Epoxid-funktionellen Monomer-Einheiten.

Die weiteren Polymerisate basieren vorzugsweise auf einem oder mehreren Monomeren ausgewählt aus der Gruppe umfassend Methacrylsäureester und Acrylsäureester von Alkoholen mit 1 bis 15 C-Atomen, Vinylaromaten, Olefine, Diene und Vinylhalogenide. Die genannten Monomere können beispielsweise die weiter oben genannten Ausführungsformen annehmen.

Die Vinylesterpolymere sind in den vernetzbaren Polymerpulver-Zusammensetzungen zu vorzugsweise ≥ 50 Gew.-%, mehr bevorzugt ≥ 70 Gew.-% und besonders bevorzugt ≥ 90 Gew.-% enthalten, jeweils bezogen auf das Gesamtgewicht der in den vernetzbaren Polymerpulver-Zusammensetzungen enthaltenen Vinylesterpolymere und weiteren Polymerisate. Am meisten bevorzugt sind keine weiteren Polymerisate enthalten.

Die Monomerauswahl bzw. die Auswahl der Gewichtsanteile der Comonomere erfolgt dabei so, dass im Allgemeinen eine Glasübergangstemperatur $T_g$ von -50°C bis +50°C, vorzugsweise -20°C bis +45°C, mehr bevorzugt -10°C bis +40°, noch mehr bevorzugt 0°C bis +40°und besonders bevorzugt 10°C bis +40°C resultiert. Die Glasübergangstemperatur $T_g$ der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min, bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die $T_g$ kann für die Vinylesterpolymere und für die weiteren Polymerisate auch mittels der Fox-Gleichung näherungsweise vorausberechnet werden. Nach Fox T. G., Bull. Am. Physics Soc. 1, 3, page 123 (1956) gilt: $1/T_g = x_1/T_{g_1} + x_2/T_{g_2} + ... + x_n/T_{g_n}$, wobei $x_n$ für den Massebruch (Gew.-%/100) des Monomeren n steht, und $T_{g_n}$ die Glasübergangstemperatur in Kelvin des Homopolymeren des Monomeren n ist. $T_g$-Werte für Homopolymerisate sind in Polymer Handbook 2nd Edition, J. Wiley & Sons, New York (1975) aufgeführt.

Geeignete mit den Epoxid-Verbindungen vernetzende Härter (Härter) sind beispielsweise solche, welche bei der Verarbeitungstemperatur von bauchemischen Produkten, im Regelfall die Umgebungstemperatur, im Allgemeinen bei Temperaturen zwischen 0°C und 40°C, mit den Epoxid-Verbindungen vernetzen. Bevorzugt werden mit den Epoxid-Verbindungen vernetzende Amine. Besonders bevorzugte Amine sind solche mit zwei oder mehr Aminogruppen, beispielsweise aliphatische Polyamine, Polyoxyalkylenamine, Polyethylenimine, Aminosilane und deren Kondensationsprodukte, aminofunktionelle Polyvinylalkohole oder Isophorondiamine. Am meisten bevorzugt werden aliphatische Polyamine, welche beispielsweise unter den Handelsnamen Anquamine$^R$ bzw. Epilink$^R$ oder Epilox$^R$-Härter erhältlich sind, oder Polyoxyalkylenamine, welche beispielsweise unter den Handelsnamen Jeffamine$^R$ erhältlich sind, oder Polyethylenimine, welche beispielsweise unter dem Handelsnamen Polyimin erhältlich sind. Am meisten bevorzugt werden auch Aminosilane und deren Kondensationsprodukte. Geeignete Aminosilane sind beispielsweise die unter dem Handelsnamen Geniosil$^R$ erhältlichen, wie N-(2-Aminoethyl)(3-Aminopropyl)-trimethoxysilan (Geniosil GF 91), (3-Aminopropyl)triethoxysilan (Geniosil GF 93), N-(2-Aminoethyl)(3-Aminopropyl)methyldimethoxysilan (Geniosil GF 95).

Die Härter können beispielsweise in Form einer Flüssigkeit, insbesondere in Form eines Pulvers zu mit Epoxid-Verbindungen modifizierten, in Wasser redispergierbaren Polymerpulver-Zusammensetzungen zugegeben werden. Wenn ein Härter bei Normalbedingungen (DIN 50014 23/50) als Flüssigkeit vorliegt, wird der Härter vorzugsweise auf ein pulverförmiges Trägermaterial aufgetragen oder mittels Schutzkolloid, beispielsweise Polyvinylalkohol, verkapselt, und in dieser Form eingesetzt.

Es können übliche pulverförmige Trägermaterialien Einsatz finden, wie Siliciumoxide wie Kieselgel oder Kieselsäure (beispielsweise Sipernat$^R$22), Tone, Titandioxide, Calciumcarbonat, Kunststoffharze wie Siliconharze. Die Auftragung kann mittels bekannter Verfahren erfolgen: Die flüssigen Härter können mit dem pulverförmigen Träger vermischt werden, wobei dann pulverförmige Partikel von mit Härter beschichtetem Träger resultieren. Hochviskose Härter können unter Scherung mit dem pulverförmigen Trägermaterial vermischt werden, beispielsweise in einer Retschmühle, um pulverförmige, mit Härter beschichtete Träger zu erhalten.

Zur Mikroverkapselung mit Schutzkolloid können die Härter beispielsweise mit einer wässrigen Lösung des Schutzkolloids vermischt und anschließend das Wasser entfernt werden, beispielsweise mittels Walzen- oder Sprühtrocknung.

Die Einsatzmenge an Härter hängt generell vom molaren Verhältnis der Epoxidgruppen der Epoxid-Verbindungen zu den funktionellen Gruppen des Härters, vorzugsweise Aminogruppen, ab. Im Allgemeinen werden die Epoxid-Verbindungen und die Härter in einem solchen Mengenverhältnis eingesetzt, dass das molare Verhältnis von Epoxidgruppen der Epoxid-Verbindungen zu den funktionellen Gruppen der Härter im Bereich von 0,5 bis 2,0 liegt.

Die vernetzbaren Polymerpulver-Zusammensetzungen können zusätzlich ein oder mehrere Reaktivverdünner enthalten, wie Glycidylether von Mono-oder Polyhydroxyphenolen oder aliphatischen oder cycloaliphatischen Alkoholen. Reaktivverdünner können beispielsweise in Form einer Vormischung gemeinsam mit den Epoxid-Verbindungen für die Herstellung der vernetzbaren Polymerpulver-Zusammensetzungen eingesetzt werden.

Die vernetzbaren Polymerpulver-Zusammensetzungen, insbesondere Mischungen aus Schutzkolloid-stabilisierten Vinylesterpolymeren und Epoxid-Verbindungen, haben Glasübergangstemperaturen Tg von vorzugsweise -40°C bis +20°C, vorzugsweise -30°C bis +10°C und besonders bevorzugt -20°C bis 0°C. Die Glasübergangstemperatur Tg der vernetzbaren Polymerpulver-Zusammensetzungen kann in bekannter Weise mittels Differential Scanning Calorimetry (DSC) ermittelt werden. Das Diagramm zur Bestimmung der Glasübergangstemperatur Tg der vernetzbaren Polymerpulver-Zusammensetzungen, insbesondere der Mischungen aus den Schutzkolloid-stabilisierten Vinylesterpolymeren und Epoxid-Verbindungen, weist vorzugsweise ein Hauptmaximum, insbesondere nur ein Maximum auf. Das Hauptmaximum entspricht dem Hauptglasübergang und bedeutet allgemein, dass die Änderung der Wärmekapazität an diesem Glasübergang allgemein größer, vorzugsweise mindestens dreimal, mehr bevorzugt mindestens sechsmal, noch mehr bevorzugt mindestens zehnmal so groß ist als an jedem weiteren Glasübergang. Das Maximum der Kurve der Glasübergangstemperatur Tg liegt vorzugsweise im vorgenannten Temperaturbereich. Diese Eigenschaft erwies sich als vorteilhaft zur Erzielung der vorteilhaften Effekte der vorliegenden Erfindung.

Wässrige Dispersionen enthaltend Schutzkolloid-stabilisierte Vinylesterpolymere und Epoxid-Verbindungen weisen vorzugsweise ähnliche gewichtsmittlere Partikeldurchmesser Dw auf wie die zu ihrer Herstellung eingesetzten wässrigen, Schutzkolloid-stabilisierten Vinylesterpolymer-Dispersionen. Dieser Aspekt kann durch folgenden Quotienten Q quantifiziert werden:

$$\text{Quotient } Q = Dw(D2) \ / \ Dw(D1),$$

worin

Dw(D2) für den gewichtsmittleren Partikeldurchmesser Dw der wässrigen Dispersion D2 enthaltend Schutzkolloid-stabilisierte Vinylesterpolymere und Epoxid-Verbindungen steht; und

Dw(D1) für den gewichtsmittleren Partikeldurchmesser Dw der Schutzkolloid-stabilisierten Vinylesterpolymer-Dispersion D1 steht, die zur Herstellung der Dispersion D2 eingesetzt wurde. Der gewichtsmittlere Partikeldurchmesser Dw wird bestimmt mittels Coulter LS 1320. Der Quotient Q ist vorzugsweise ≤ 5, mehr bevorzugt ≤ 4, besonders bevorzugt ≤ 3 und am meisten bevorzugt ≤ 2,5. Der Quotient Q ist ein Indikator für die Homogenität und Stabilität von wässrigen Dispersionen enthaltend der Vinylesterpolymere und Epoxid-Verbindungen.

Ein weiterer Gegenstand der Erfindung sind Verfahren zur Herstellung der erfindungsgemäßen vernetzbaren Polymerpulver-Zusammensetzungen,

indem ein oder mehrere Vinylester mittels radikalisch initiierter Emulsionspolymerisation oder Suspensionspolymerisation in Wasser polymerisiert werden und anschließend getrocknet wird,
wobei vor oder während der Polymerisation oder vor oder während der Trocknung ≥ 51 Gew.-%, bezogen auf das Gesamtgewicht der Vinylesterpolymere, Epoxid-Verbindungen zugegeben werden.

Die Polymerisation zur Herstellung der Vinylesterpolymere oder der weiteren Polymerisate erfolgt allgemein nach dem Emulsionspolymerisationsverfahren oder nach dem Suspensionspolymerisationsverfahren, vorzugsweise nach dem Emulsionspolymerisationsverfahren, wobei die Polymerisationstemperatur im Allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation kann mit den für die Emulsionspolymerisation bzw. Suspensionspolymerisation gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0,001 bis 0,02 Gew.-%, vorzugsweise 0,001 bis 0,01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide für die Polymerisation sind beispielsweise Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höpplerviskosität, in 4 %-iger wässriger Lösung, von 3 bis 25 mPas (Methode nach Höppler bei 20°C, DIN 53015). Am meisten bevorzugt werden auch die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester unter den Bezeichnungen VeoVa$^R$5, VeoVa$^R$9, VeoVa$^R$10 und VeoVa$^R$11 angeboten werden. Weitere am meisten bevorzugte Polyvinylalkohole sind teilverseifte, hydrophobierte Polyvinylacetate, die durch polymeranaloge Umsetzung, beispielsweise Acetalisierung der Vinylalkoholeinheiten mit $C_1$- bis $C_4$-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas. Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Vorzugsweise werden keine Emulgatoren eingesetzt. Beispiele für Emulgatoren sind anionische, kationische oder nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 EthylenoxidEinheiten.

Die Monomere können zur Herstellung der Dispersion für die Polymerisation allesamt vorgelegt werden (Batch-Prozess), oder es wird ein Teil der Monomere vorgelegt und der Rest dosiert (Semibatch-Prozess).

Die Epoxid-Verbindungen können beispielsweise vor und/oder während der Polymerisation zur Herstellung der Vinylesterpolymere und/oder der weiteren Polymerisate und/oder vor der Trocknung der damit erhaltenen Polymerdispersionen zugegeben werden. Die Epoxid-Verbindungen können ganz oder teilweise mit dem Ansatzwasser für die Polymerisation vorgelegt werden. Die Epoxid-Verbindungen können auch ganz oder teilweise in Monomer gelöst vorgelegt werden. In einer weiteren Ausführungsform können die Epoxid-Verbindungen ganz oder teilweise nach der Initiierung der Polymerisation zudosiert werden. Vorzugsweise werden die Epoxid-Verbindungen auch ganz oder teilweise während oder nach einer etwaigen Nachpolymerisation der Polymerdispersion zugegeben werden. Besonders bevorzugt werden die Epoxid-Verbindungen ganz oder teilweise nach Abschluss der Polymerisation, insbesondere nach Abschluss einer etwaigen Nachpolymerisation, der damit erhaltenen Polymerdispersion, insbesondere vor deren Trocknung, zugegeben. Dies ist von Vorteil für die Kohäsions- oder Adhäsionseigenschaften der applizierten vernetzbaren Polymerpulver-Zusammensetzungen.

Die mit dem erfindungsgemäßen Verfahren erhältlichen wässrigen Dispersionen haben einen Feststoffgehalt von 30 bis 75 Gew.-%, vorzugsweise von 45 bis 60 Gew.-%.

Zur Herstellung der in Wasser redispergierbaren Polymerpulver oder der vernetzbaren, in Wasser redispergierbaren Polymerpulver-Zusammensetzungen können die wässrigen Dispersionen, gegebenenfalls nach Zusatz von Schutzkolloiden als Trocknungshilfe, auf übliche Weise getrocknet werden, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-% eingesetzt. Das heißt, die Gesamtmenge an Schutzkolloid vor dem Trocknungsvorgang soll vorzugsweise mindestens 3 bis 30 Gew.-% betragen; besonders bevorzugt werden 5 bis 20 Gew.-% eingesetzt. Die Angaben in Gew.-% beziehen sich hierbei auf das Gesamtgewicht der in der Dispersion enthaltenen Epoxid-Verbindungen, Vinylesterpolymere und gegebenenfalls weiterer Polymerisate.

Geeignete Trocknungshilfen sind beispielsweise teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC. Bevorzugt werden keine weiteren Schutzkolloide als teilverseifte Polyvinylalkohole als Trocknungshilfe eingesetzt.

Vielfach hat sich ein Zusatz von Antischaummittel, insbesondere von bis zu 1,5 Gew.-%, bezogen auf die Vinylesterpolymere und gegebenenfalls die weiteren Polymerisate, als günstig erwiesen, vorzugsweise bei der Verdüsung. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf Gesamtgewicht der Epoxid-Verbindungen, Vinylesterpolymere und gegebenenfalls weiterer Polymerisate, ausgerüstet werden. Beispiele für Antiblockmittel sind Ca- bzw. Mg-Carbonat, Talk, Gips, Kieselsäure, Kaoline, Metakaolin, Silicate mit Teilchengrößen vorzugsweise im Bereich von 10 nm bis 10 pm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 300 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel, Verlaufsmittel.

Härter werden vorzugsweise den Pulvern zugesetzt, besonders bevorzugt unmittelbar nach der Trocknung der wässrigen Dispersionen. Es kann auch so vorgegangen werden, dass die vernetzbaren Polymerpulver-Zusammensetzungen erst vor ihrer Applikation, vorzugsweise unmittelbar vor ihrer Applikation, mit Härter vermischt werden. Denkbar ist auch, dass die vernetzbaren Polymerpulver-Zusammensetzungen und pulverförmiger Härter getrennt voneinander appliziert werden. Beispielsweise bei der Herstellung von Trockenmörtel-Zusammensetzungen können die vernetzbaren Polymerpulver-Zusammensetzungen und pulverförmiger Härter getrennt voneinander, gegebenenfalls vorgemischt mit weiteren Rezepturbestandteilen, abgemischt werden.

Bei der Herstellung pastöser Systeme kann beispielsweise auch so vorgegangen werden, dass die vernetzbaren Polymerpulver-Zusammensetzungen vor der Applikation, vorzugsweise unmittelbar vor der Applikation, mit flüssigem Härter vermischt wird. Denkbar ist auch, dass die vernetzbaren Polymerpulver-Zusammensetzungen sowie fester oder flüssiger Härter erst im Anmachwasser gemischt werden: Beispielsweise können flüssige Härter dem Anmachwasser zugegeben werden, und die vernetzbaren Polymerpulver-Zusammensetzungen und andere feste Rezepturbestandteile können mit diesem Anmachwasser anschließend abgemischt werden. Oder alternativ können zuerst die festen Bestandteile, wie die vernetzbaren Polymerpulver-Zusammensetzungen im Anmachwasser dispergiert und anschließend flüssige Härter zugegeben werden.

Die vernetzbaren Polymerpulver-Zusammensetzungen können in den dafür typischen Anwendungsbereichen eingesetzt werden, beispielsweise in bauchemischen Produkten, gegebenenfalls in Verbindung mit mineralischen Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Wasserdampfsperren, Verlaufsmassen, Dichtschlämmen, Fugenmörtel, Reparaturmörtel und Farben. Ferner als Beschichtungsmittel oder Klebemittel; oder als Beschichtungs- oder Bindemittel für gewebte und nichtgewebte Textilien und Papier.

Die Rezepturen für bauchemische Produkte können ein oder mehrere mineralische Bindemittel enthalten oder alternativ frei von mineralischem Bindemittel sein. Beispiele für mineralische Bindemittel sind kalkbasierte Bindemittel, insbesondere Kalkhydrat oder Wasserglas, Gips und/oder bevorzugt hydraulisch abbindende Bindemittel, wie Zement, insbesondere Portland-, Aluminat-, Trass-, Hütten-, Magnesia- oder Phosphat-Zement. Rezeptur für bauchemische Produkte enthalten im Allgemeinen 50 bis 80 Gew.-% Füllstoffe, wie Sand und/oder Calciumcarbonat, und 20 bis 50 Gew.-% der vernetzbaren Polymerpulver-Zusammensetzung, bezogen auf das Trockengewicht der Rezeptur. Mineralische Bindemittel sind zu vorzugsweise 0,1 bis 40 Gew.-%, mehr bevorzugt 10 bis 30 Gew.-% und besonders bevorzugt 15 bis 25 Gew.-% enthalten. Alternative Rezepturen enthalten vorzugsweise < 10 Gew.-%, mehr bevorzugt ≤ 9 Gew.-%, noch mehr bevorzugt ≤ 5 Gew.-%, besonders bevorzugt ≤ 2 Gew.-% und am meisten bevorzugt keinen Zement und/oder keine mineralischen Bindemittel.

Die erfindungsgemäßen vernetzbaren Polymerpulver-Zusammensetzungen zeichnen sich durch hohe Reaktivität und zugleich durch hohe Lagerstabilität aus, auch über einen langen Lagerzeitraum - und dies trotz des sehr hohen Anteils an Epoxid-Verbindungen in den vernetzbaren Polymerpulver-Zusammensetzungen. Die Redispergierbarkeit der vernetzbaren Polymerpulver-Zusammensetzungen bleibt im Laufe der Lagerung erhalten. Mit den vernetzbaren Polymerpulver-Zusammensetzungen können auch lagerstabile 1-K-Systeme formuliert werden. Vorzeitiger Vernetzung wird mit den erfindungsgemäßen Maßgaben entgegengewirkt.

Nach Redispergieren der vernetzbaren Polymerpulver-Zusammensetzungen in Wasser werden rasch abbindende Vernetzersysteme erhalten, die zu Filmen mit hoher mechanischer Festigkeit führen. Mit den vernetzbaren Polymerpulver-Zusammensetzungen hergestellte pastöse Systeme haben vorteilhafte anwendungstechnische Eigenschaften, wie hohe Aushärtungsgeschwindigkeiten, verlaufsunterstützende, thixotrope oder hydrophobierende Eigenschaften.

Einsatz der vernetzbaren Polymerpulver-Zusammensetzungen im Baubereich, beispielsweise in Klebemörteln oder Putzen, führt zu Produkten mit hoher Wasserdampfdurchlässigkeit, Druckfestigkeit, Reißfestigkeit oder Abriebsbeständigkeit, nach Trocken- oder Nasslagerung, auch ohne den Zusatz von mineralischen Bindemitteln, oder zu Produkten mit hoher Chemikalienresistenz. Es sind auch Produkte mit hoher Oberflächenhärte zugänglich, was beispielsweise auch für Fugenmörtel gewünscht ist.

Die nachfolgenden Beispiele dienen der weiteren Erläuterung der Erfindung:

Herstellung von wässrigen Dispersionen basierend auf Polymeren und Epoxidharzen:

Beispiel 5:

In einem Reaktor mit 400 L Volumen wurden 125 kg einer wässrigen Dispersion eines Polyvinylalkohol stabilisierten Vinylacetat-Ethylen-Copolymers (Tg von 14,1°C; Festgehalt von 58,0%) vorgelegt und unter Rühren bei 60 upm auf 70°C aufgeheizt. Anschließend wurden 88,6 kg des Epoxidharzes Epilox F17-00 innerhalb von 15 min zudosiert.

Die so erhaltene Dispersion enthielt 55 Gew.-% Epoxidharz, bezogen auf Trockengewicht aus Vinylacetat-Ethylen-Copolymer und Epoxidharz.

Beispiele 1~4, Beispiele 6~11 sowie Vergleichsbeispiele 1~3: Die Herstellung der Dispersionen erfolgte analog zu Beispiel 5, jedoch mit den Maßgaben von Tabelle 1.

Bestimmung von Glasübergangstemperaturen Tg für Dispersionen bzw. Polymerpulver basierend auf Polymeren und Epoxidharz:

Die Glasübergangstemperaturen Tg wurden nach DIN-EN-ISO 11357-2 bestimmt.

Aus der jeweiligen Dispersion wurde bei Raumtemperatur über Nacht ein Film hergestellt. Der Film wurde unter Vakuum für 24 h bei Raumtemperatur getrocknet und unter Stickstoff gelagert; anschließend erfolgte die Bestimmung der Glasübergangstemperatur Tg.

Für die Bestimmung der Glasübergangstemperatur Tg an Hand eines Pulvers wurde das jeweilige Pulver unter Vakuum bei Raumtemperatur für 24 h getrocknet; anschließend erfolgte die Bestimmung der Glasübergangstemperatur Tg.

Tabelle 1: Dispersionen basierend auf Polymeren und Epoxidharz:

| | Polymer[a)] | Tg[b)] [°C] | Epoxidharz[c)] | Epoxidharz-Anteil[d)] [Gew.%] |
|---|---|---|---|---|
| Bsp.1 | VAE | -7,1 | Epilox F17-00 | 55 |
| Bsp.2 | VAE | -7,1 | Epilox F17-00 | 66 |
| Bsp.3 | VAE | -7,1 | Araldite GY776 | 55 |
| Bsp.4 | VAE | -7,1 | Araldite GY776 | 66 |
| Bsp.5 | VAE | 14,1 | Epilox F17-00 | 55 |
| Bsp.6 | VAE | 14,1 | Epilox F17-00 | 66 |
| Bsp.7 | VAE | 14,1 | Araldite GY776 | 55 |
| Bsp.8 | VAE | 14,1 | Araldite GY776 | 66 |
| Bsp.9 | VAE | 20,4 | Epilox F17-00 | 50 |
| Bsp.10 | VAE | 20,4 | Epilox F17-00 | 60 |
| Bsp.11 | VAc | 37 | Epilox F17-00 | 57 |
| VBsp.1 | Sty/BA | 36,1 | Epilox F17-00 | 38 |
| VBsp.2 | Sty/BA | 36,1 | Araldite GY250 | 55 |
| VBsp.3 | Sty/BA | -15 | Epilox F17-00 | 50 |

a): VAE: Vinylacetat-Ethylen-Copolymer; VAc: Vinylacetat-Homopolymer; Sty/BA: Styrol-Butylacrylat-Copolymer;
b): Glasübergangstemperatur Tg der Polymere;
c): Epilox F17-00: Bisphenol-F-Typ, Glasübergangstemperatur Tg: -31,7°C, Handelsname der Firma Leuna Harze; Araldite GY776: Bisphenol A-Typ, Glasübergangstemperatur Tg: -23,1°C, Handelsname der Firma Huntsman; Araldite GY250: Bisphenol A-Typ, Handelsname der Firma Huntsman;
d): Gew.-% Epoxidharz, bezogen auf Trockengewicht aus Polymer und Epoxidharz.


Untersuchung der Stabilität der Dispersionen basierend auf Polymeren und Epoxidharz:

Die Stabilität der Dispersionen wurde an Hand ihrer Neigung zur Phasentrennung mit folgenden qualitativen Kriterien bewertet:

- Note 1:
  keine Phasentrennung nach 72 h Lagerung bei Raumtemperatur;
- Note 2:
  weitgehende Phasenseparation bereits nach weniger als 24 h bei Raumtemperatur;
- Note 3:
  weitgehende Phasenseparation bereits nach weniger als 12 h bei Raumtemperatur.

Diese Austestung dient auch zur Beurteilung, ob die Dispersionen für eine Sprühtrocknung zur Herstellung von Pulvern geeignet sind. Für eine Sprühtrocknung sind Dispersionen mit der Note 1 erforderlich.

Diskussion der Stabilität und der Glasübergangstemperaturen Tg der Dispersionen der (Vergleichs)Beispiele:

Die Glasübergangstemperaturen Tg sowie die Beurteilung der Stabilität der Dispersionen der Beispiele 1~11 und der Vergleichsbeispiele 1~3 sind in Tabelle 2 zusammengefasst.
Die Dispersionen der erfindungsgemäßen Beispiele 1~11 mit Vinylesterpolymeren ergaben nur einen Glasübergang, die nichterfindungsgemäßen Vergleichsbeispiele 1~3 mit Styrol-Butylacrylatcopolymeren führten dagegen zu mindestens zwei Glasübergängen.
Die Austestung der Stabilität der Dispersionen zeigte, dass die Styrolacrylatpolymer-Dispersionen mit erfindungsgemäß hohen Gehalten an Epoxidharz so instabil sind, dass sie sich nicht zur Sprühtrocknung eignen - im Gegensatz zu den erfindungsgemäßen Vinylesterpolymer-Dispersionen der Beispiele, die sich durch eine hohe Stabilität auszeichnen.

Tabelle 2: Glasübergangstemperaturen Tg und Stabilität der Dispersionen:

| | Glasübergangstemperatur Tg [°C] | Glasübergang | Stabilität |
|---|---|---|---|
| Bsp.1 | -17,3 | einstufig | 1 |
| Bsp.2 | -19,0 | einstufig | 1 |
| Bsp.3 | -16,5 | einstufig | 1 |
| Bsp.4 | -18,3 | einstufig | 1 |
| Bsp.5 | -11,1 | einstufig | 1 |
| Bsp.6 | -15,9 | einstufig | 1 |
| Bsp.7 | -9,4 | einstufig | 1 |
| Bsp.8 | -14,5 | einstufig | 1 |
| Bsp.9 | -8,7 | einstufig | 1 |
| Bsp.10 | -14,3 | einstufig | 1 |
| Bsp.11 | -7,9 | einstufig | 1 |
| VBsp.1 | -10,8; -7,1 | mehrstufig | 2 |
| VBsp.2 | -14,3; -0,9 | mehrstufig | 3 |
| VBsp.3 | -21,6; -6,3 | mehrstufig | 3 |

Partikelgrößen von Polymeren in Dispersionen:

Die Herstellung der Dispersionen der Beispiele 12~16 sowie der Vergleichsbeispiele 4~6 erfolgte analog zu Beispiel 5, jedoch mit den Maßgaben von Tabelle 3.

Es wurde der gewichtsmittlere Partikeldurchmesser Dw der jeweiligen Polymerdispersion Dw(D1) und der jeweiligen, Polymere und Epoxidharz enthaltenden Dispersion Dw(D2) bestimmt (Bestimmungsmethode: Coulter LS 1320).

Der Quotient aus Dw(D2) / Dw(D1) ist ein Indikator für die Homogenität und Stabilität der Polymere und Epoxidharz enthaltenden Dispersion.

Damit eine Dispersion für die Sprühtrocknung besonders geeignet ist, sollte der Quotient aus Dw(D2) / Dw(D1) vorzugsweise ≤ 2,5 sein.

Höhere Verhältnisse können auf Inhomogenität und Instabilität der Dispersion hindeuten.

In Tabelle 3 sind die Ergebnisse zusammengefasst. Die Vergleichsbeispiele 4~6 zeigen, dass das vorgenannte Kriterium für den Quotienten Dw(D2) / Dw(D1) mit Styrolacrylat-Polymeren und erfindungsgemäßen Epoxidharzgehalten nicht eingehalten wird - im Gegensatz zu den erfindungsgemäßen Dispersionen mit Vinylesterpolymeren.

Tabelle 3: Dispersionen basierend auf Polymeren und Epoxidharz:

| | Polymer[a] | Tg [b] [°C] | Epoxidharz [c] | Epoxidharz-Anteil [d] [Gew.%] | Dw [e] [μm] | | Dw(D2) / Dw(D1) |
|---|---|---|---|---|---|---|---|
| | | | | | D1 | D2 | |
| VBsp.4 | Sty/BA | 36,1 | Araldite GY250 | 55 | 2,2 | 11,6 | 5,27 |
| VBsp.5 | Sty/BA | 20,5 | Epilox F17-00 | 55 | 3,1 | 26,3 | 8,5 |
| VBsp.6 | Sty/BA | 14 | Epilox F17-00 | 55 | 2,2 | 21,8 | 9,9 |
| Bsp.12 | VAc | 37 | Epilox F17-00 | 66 | 1,3 | 2,8 | 2,2 |
| Bsp.13 | VAE | 14,1 | Epilox F17-00 | 66 | 1,1 | 2,2 | 2,0 |
| Bsp.14 | VAE | 14,1 | Araldite GY776 | 66 | 1,1 | 1,7 | 1,5 |
| Bsp.15 | VAE | 14,1 | Epilox F17-00 | 55 | 1,1 | 1,7 | 1,5 |
| Bsp.16 | VAE | 14,1 | Araldite GY776 | 55 | 1,1 | 1,9 | 1,7 |

a): VAE: Vinylacetat-Ethylen-Copolymer; VAc: Vinylacetat-Homopolymer; Sty/BA: Styrol-Butylacrylat-Copolymer;

b): Glasübergangstemperatur Tg der Polymere;

c): Epilox F17-00: Bisphenol-F-Typ, Glasübergangstemperatur Tg: -31,7°C, Handelsname der Firma Leuna Harze; Araldite GY776: Bisphenol A-Typ, Glasübergangstemperatur Tg: -23,1°C, Handelsname der Firma Huntsman; Araldite GY250: Bisphenol A-Typ, Handelsname der Firma Huntsman;

d): Gew.-% Epoxidharz, bezogen auf Trockengewicht aus Polymer und Epoxidharz;

e): Dw: gewichtsmittlerer Partikeldurchmessern bestimmt mittels Coulter LS 1320; D1: Polymerdispersion; D2: Dispersion basierend auf Polymer und Epoxidharz.

Herstellung von erfindungsgemäßen vernetzbaren Redispersionspulvern (DPP):

Beispiel 17:

In einem Reaktor mit 10 L Volumen wurden 2000 g einer 58%igen wässrigen Polyvinylalkohol stabilisierten Dispersion eines Vinylacetat-Homopolymers (Glasübergangstemperatur Tg 37°C) bei 70°C über 2h mit 1856 g des Epoxidharzes Araldite GY250 (Bisphenol A-Typ, Handelsname der Firma Huntsman) homogenisiert. Nach Abkühlen auf 40°C wurden 452 g einer 20%igen wässrigen Polyvinylalkohollösung (Höpplerviskosität von 4 mPas, Hydrolysegrad von 88%) und 1856 g einer 11%igen wässrigen Polyvinylalkohollösung (Höpplerviskosität von 13 mPas, Hydrolysegrad von 88%) zugegeben.

Hierzu wurden noch 7,5 g des Entschäumers Surfynol MD20 (Handelsname der APCI) und 22,6 g des Entschäumers Foamstar SI 2213 (basiert auf Mineralöl/Siliconöl; Handelsname der BASF) zugegeben.

Die so erhaltene Dispersion hatte einen Festgehalt von 53,7% und eine Viskosität von 180 mPas (Brookfield 20 RMP, 23°C, Spindel 1) und wurde in einem Gleichstromtrockner mittels Druckluftzerstäuber bei einer Eingangstemperatur von 135°C und einer Ausgangstemperatur von 85°C unter Zudosierung von 2,5 Gew.-%, bezogen auf organische Bestandteile, an Kaolin als Antiblockmittel getrocknet.

Es wurden 2968 g eines farblosen, gut rieselfähigen, in Wasser redispergierbaren Pulvers erhalten. Das Pulver wurde mit 10 Gew.-%, bezogen auf organische Bestandteile, Kaolin als Antiblockmittel abgemischt.

Das Pulver enthielt 50 Gew.-% Epoxidharz und 31 Gew.-% Vinylacetat-Homopolymer, was einem Anteil von 161,3 Gew.-% Epoxidharz, bezogen auf Vinylacetat-Homopolymer, entspricht.

Vergleichsbeispiel 7:

Es kam eine wässrige, Polyvinylalkohol stabilisierte Dispersion eines Styrol-Butylacrylat-Copolymers zum Einsatz (Glasübergangstemperatur Tg: 20,5°C; Festgehalt 52%); ansonsten wurde Vergleichsbeispiel 7 analog ausgeführt wie Beispiel 17.

Es konnte kein homogenes rieselfähiges Pulver erhalten werden. Dies zeigt, dass mit Styrol-Butylacrylat-Copolymeren redispergierbare Polymerpulver mit hohem Gehalt an Epoxyharz nicht zugänglich sind.

Beispiele 18~21 und Vergleichsbeispiel 8:

Die vernetzbaren Redispersionspulver der Beispiele 18~21 und Vergleichsbeispiel 8 wurden analog hergestellt wie Beispiel 17, jedoch mit den Maßgaben der Tabelle 4.

Tabelle 4: vernetzbare Redispersionspulver basierend auf Polymeren und Epoxidharz:

| | Polymer[a)] | Tg[b)] [°C] | Epoxidharz[c)] | Epoxidharz-Anteil[d)] [Gew.%] |
|---|---|---|---|---|
| Bsp.17 | VAc | 37 | Araldite GY250 | 61 |
| Bsp.18 | VAc | 37 | Epilox F17-00 | 61 |
| Bsp.19 | VAc | 37 | Epilox F17-00 | 61 |
| Bsp.20 | VAE | 14,1 | Epilox F17-00 | 61 |
| Bsp.21 | VAE | -7,0 | Epilox F17-00 | 61 |
| VBsp.8 | Sty/BA | 20,5 | Epilox F17-00 | 23 |

a): VAc: Vinylacetat-Homopolymer; VAE: Vinylacetat-Ethylen-Copolymer; Sty/BA: Styrol-Butylacrylat-Copolymer;
b): Glasübergangstemperatur Tg der Polymere;
c): Epilox F17-00: Bisphenol-F-Typ, Glasübergangstemperatur Tg: -31,7°C, Handelsname der Firma Leuna Harze; Araldite GY250: Bisphenol A-Typ, Handelsname der Firma Huntsman;
d): Gew.-% Epoxidharz, bezogen auf Trockengewicht aus Polymer und Epoxidharz.

Diskussion der vernetzbaren Redispersionspulver (DPP):

Das Vergleichsbeispiel 8 zeigt, dass mit Styrolacrylatpolymeren vernetzbare Redispersionspulver zugänglich sind, sofern der Epoxidharzanteil gering ist.

Dagegen waren vernetzbare Redispersionspulver basierend auf Styrolacrylatpolymeren und höherem Epoxidharzanteil nicht zugänglich, wie mit obigem Vergleichsbeispiel 7 gezeigt.

Tabelle 5: Glasübergangstemperaturen Tg und Stabilität der Pulver der (Vergleichs)Beispiele:

| | Glasübergangstemperatur Tg [°C] | Glasübergang |
|---|---|---|
| Bsp.17 | -6,1 | einstufig |
| Bsp.18 | -9,8 | einstufig |
| Bsp.19 | -8,8 | einstufig |
| Bsp.20 | -11,5 | einstufig |
| Bsp.21 | -18,2 | einstufig |
| VBsp.8 | +2,0 | einstufig |

Mit Vinylesterpolymeren waren vernetzbare Redispersionspulver mit hohen Anteilen an Epoxidharz zugänglich (Beispiele 17~21).

Die erfindungsgemäßen vernetzbaren Redispersionspulver (Beispiele 17~21) zeigen allesamt einstufige Glasübergänge, wie in Tabelle 5 festgehalten.

Zementfreie Mörtelformulierung und deren Austestung:

Die Rezepturen der zementfreien Mörtelformulierungen sind in Tabelle 6 angegeben.

Als Redispersionspulver (DPP) kamen die oben beschriebenen vernetzbaren Redispersionspulver des Beispiels 18 bzw. des Vergleichsbeispiels 8 zum Einsatz.

In der zementfreien Mörtelformulierung des Vergleichsbeispiels 11 wurde das Redispersionspulver VBsp.9 eingesetzt. Das Redispersionspulver VBsp.9 entsprach Beispiel 18, mit dem Unterschied, dass es kein Epoxidharz enthielt.

Tabelle 6: Rezepturen von zementfreien Mörtelformulierungen:

| | Bsp.22 [Gew.-T] | VBsp.10 [Gew.-T] | VBsp.11 [Gew.-T] |
|---|---|---|---|
| Redispersionspulver | | | |
| Bsp.18 | 120,0 | | |
| VBsp.8 | | 162 | |
| VBsp.9 | | | 200 |
| Aradur 3965 [a] | 78 | 69,1 | |
| Melflux 6681F [b] | 0,6 | 0,6 | 0,6 |
| Quarzsand 12 [c] | 604,8 | 604,8 | 578,02 |
| Quarzsand F 32 [d] | 225,4 | 225,4 | 215,38 |
| Natrosol 250 GR [e] | 2,1 | 2,1 | 2,0 |
| Edelkalkhydrat [f] | 4,2 | 4,2 | 4,0 |
| Wasser (insgesamt) | 145 | 145 | 145 |

a): Aradur 3965: wässrige Lösung (55%ig), Handelsname der Firma Huntsman, Härter; b): Dispergiermittel, Handelsname der Firma BASF; c): Füllstoff, Sieblinie 0,06-0,2; d): Füllstoff, Sieblinie 0,24; e): Hydroxyethylcellulose, Handelsname der Firma Ashland, Verdicker; f): $Ca(OH)_2$, Beschleuniger.

Die Herstellung der zementfreien Mörtelformulierungen erfolgte, indem zunächst die Pulverkomponenten in einem Labormischer vereinigt und homogenisiert wurden.

Die Härtekomponente Aradur 3965 wurde mit dem Anmischwasser zugegeben.

Das Anmischen des Mörtels erfolgte mit einem Dissolver mit einem 6 cm Zahnkranz bei 2000 upm über eine Minute.

Nach einer Ruhezeit von 2 min wurde die Mischung 15 sec aufgerührt und in Schalungsformen eingebracht. Es wurden Prismen der Dimension 2*2*4 cm erhalten.

Der Prüfkörper von Beispiel 22 konnte bereits nach 1 Tag bei Raumtemperatur ausgeschalt werden, der Prüfkörper von Vergleichsbeispiel 11 dagegen erst nach Tagen 2 bei Raumtemperatur.

Der Prüfkörper von Vergleichsbeispiel 10 konnte selbst nach 12 Tagen bei Raumtemperatur nicht zerstörungsfrei ausgeschalt werden, so dass eine Bestimmung der Druckfestigkeit unmöglich war.

Der Prüfkörper von Beispiel 22 zeigte eine erheblich höhere Druckfestigkeit als der Prüfkörper von Vergleichsbeispiel 11. Die Druckfestigkeit wurde an Hand der Prüfkörper bestimmt in Anlehnung an DIN EN 12808 Teil 3 mit Prismen 2*2*4 cm. Der Druckfestigkeitswert bezieht sich auf die korrigierte Auflagefläche. Die Austestungsergebnisse sind in Tabelle 7 zusammengefasst (Spalte "nach RT Härtung").

Tabelle 7: Austestungsergebnisse Prüfkörper basierend auf zementfreien Mörtelformulierungen:

| | Ausschalung [Tage] | Druckfestigkeit [N/mm$^2$] | |
|---|---|---|---|
| | | nach RT Härtung | nach Nach vernetzung |
| Bsp.22 | 1 | 8 | 25 |
| VBsp.10 | 12 | - | 3,2 |
| VBsp.11 | 2 | 4,5 | Prüfkörper deformiert, nicht prüfbar |

Nachvernetzungsversuche:

Hierzu wurden die oben beschriebenen, nicht ausgeschalten Prüfkörper der (Vergleichs)Beispiele 22, 10 und 11 für 12 h bei 120°C gelagert. Anschließend wurde die Druckfestigkeit bestimmt in Anlehnung an DIN EN 12808 Teil 3 mit Prismen 2*2*4 cm. Der Druckfestigkeitswert bezieht sich auf die korrigierte Auflagefläche. Die Austestungsergebnisse sind in Tabelle 7 zusammengefasst.

Der Prüfkörper von Beispiel 22 zeigte einen erheblichen Nachvernetzungseffekt: die Druckfestigkeit konnte durch die Nachvernetzung weiter gesteigert werden.

Für den Prüfkörper von Vergleichsbeispiel 11 konnte kein signifikanter Nachvernetzungseffekt erzielt werden.

Auch nach Nachvernetzung blieb die Druckfestigkeit des Prüfkörpers von Vergleichsbeispiel 10 dramatisch hinter Beispiel 22 zurück.

Vernetzungsfähigkeit von Polymerfilmen

Die vernetzbaren Redispersionspulver (DPP) von Beispiel 18, Beispiel 20 und des Vergleichsbeispiels 8 wurden jeweils in Wasser redispergiert unter Bildung einer Dispersion mit 50%-igen Feststoffgehalt. Anschließend wurde der Härter Epilink 701 (Handelsname der Firma EVONIK) entsprechend der molaren Mischungsverhältnisse der Tabelle 8 abgemischt.

Mit den so erhaltenen Dispersionen wurden Polymerfilme hergestellt.

Nach Trocknen wurden die Polymerfilme gelagert, wie im Folgenden angegeben, und anschließend wurden die Reißfestigkeiten nach DIN 53504 (S3a) ermittelt:

o 7d RT: 7 Tage Lagerung an Luft bei Raumtemperatur;
o 7d $H_2O$ + 7d RT: 7 Tagen Wasserlagerung und anschließend 7 Tage Lagerung an Luft bei Raumtemperatur.

Die Ergebnisse sind in Tabelle 8 zusammengefasst.

Die Ergebnisse zeigen, dass die erfindungsgemäßen vernetzbaren Redispersionspulver der Beispiele 18 und 20 nach Redispergieren in Wasser wirksam vernetzt werden können und das Epoxidharz der Vernetzung mit Aminvernetzer, wie Epilink 701, zugänglich ist.

Daraus folgt, dass im Zuge der Herstellung und Lagerung der erfindungsgemäßen vernetzbaren Redispersionspulver keine vorzeitige Vernetzung erfolgte und die erfindungsgemäßen vernetzbaren Redispersionspulver sehr gut redispergierbar sind, und dies trotz ihres hohen Anteils an Epoxidharz.

Tabelle 8: Austestungsergebnisse mit vernetzten Polymerfilmen:

| Redispersionspulver | Molenverhältnis Epoxid / Härter | Lagerung | Reißfestigkeit [MPa] |
|---|---|---|---|
| Bsp.20 | 0 | 7d RT | 1,69 |
| | 0,8 | 7d RT | 10,4 |
| | 0,8 | 7d $H_2O$ + 7d RT | 7,78 |
| | 1,2 | 7d RT | 14,2 |
| | 1,2 | 7d $H_2O$ + 7d RT | 15,9 |
| Bsp.18 | 0 | 7d RT | 2,38 |
| | 0,8 | 7d RT | 11,8 |
| | 0,8 | 7d $H_2O$ + 7d RT | 10,4 |

(fortgesetzt)

| Redispersionspulver | Molenverhältnis Epoxid / Härter | Lagerung | Reißfestigkeit [MPa] |
|---|---|---|---|
| | 1,2 | 7d RT | 15,8 |
| | 1,2 | 7d $H_2O$ + 7d RT | 15 |
| VBsp.8 | 0 | 7d RT | 7,1 |
| | 0,8 | 7d RT | 10,3 |
| | 0,8 | 7d $H_2O$ + 7d RT | 9,7 |
| | 1,2 | 7d RT | 9,2 |
| | 1,2 | 7d $H_2O$ + 7d RT | 5,1 |

**Patentansprüche**

1. Vernetzbare, in Wasser redispergierbare Polymerpulver-Zusammensetzungen enthaltend

   ein oder mehrere Schutzkolloid-stabilisierte Vinylesterpolymere,
   ein oder mehrere Epoxid-Gruppen tragende Verbindungen und gegebenenfalls ein oder mehrere, mit den Epoxid-Gruppen tragenden Verbindungen vernetzende Härter, wobei die Vinylesterpolymere keine Epoxid-funktionellen Monomer-Einheiten enthalten und
   die vernetzbaren, in Wasser redispergierbaren Polymerpulver-Zusammensetzungen ≥ 51 Gew.-%, bezogen auf das Gesamtgewicht der Vinylesterpolymere, an einer oder mehreren Epoxid-Gruppen tragenden Verbindungen enthalten und Mischungen aus den Schutzkolloid-stabilisierten Vinylesterpolymeren und den Epoxid-Gruppen tragenden Verbindungen Glasübergangstemperaturen Tg von -40°C bis +20°C, bestimmt mittels Differential Scanning Calorimetry, haben.

2. Vernetzbare, in Wasser redispergierbare Polymerpulver-Zusammensetzungen nach Anspruch 1, **dadurch gekennzeichnet, dass** als Epoxid-Gruppen tragende Verbindungen ein oder mehrere Epoxidharze enthalten sind.

3. Vernetzbare, in Wasser redispergierbare Polymerpulver-Zusammensetzungen nach Anspruch 1 oder 2, **dadurch gekennzeichnet, dass** 55 bis 300 Gew.-% Epoxid-Gruppen tragende Verbindungen enthalten sind, bezogen auf das Gesamtgewicht der Vinylesterpolymere.

4. Vernetzbare, in Wasser redispergierbare Polymerpulver-Zusammensetzungen nach Anspruch 1 bis 3, **dadurch gekennzeichnet, dass** 20 bis 75 Gew.-% Epoxid-Gruppen tragende Verbindungen enthalten sind, bezogen auf das Gesamtgewicht der vernetzbaren, in Wasser redispergierbaren Polymerpulver-Zusammensetzungen.

5. Vernetzbare, in Wasser redispergierbare Polymerpulver-Zusammensetzungen nach Anspruch 1 bis 4, **dadurch gekennzeichnet, dass** ein oder mehrere Vinylesterpolymere zu ≥ 50 Gew.-% auf Vinylestern basieren, bezogen auf das Gesamtgewicht der Vinylesterpolymere.

6. Vernetzbare, in Wasser redispergierbare Polymerpulver-Zusammensetzungen nach Anspruch 1 bis 5, **dadurch gekennzeichnet, dass** ein oder mehrere Vinylesterpolymere ausgewählt werden aus der Gruppe umfassend Vinylester-Homopolymere, Mischpolymerisate von Vinylacetat mit Ethylen, Mischpolymerisate von Vinylacetat mit Ethylen und einem oder mehreren weiteren Vinylestern, Mischpolymerisate von einem oder mehreren Vinylestern, Vinylchlorid und Ethylen und Mischpolymerisate von Vinylacetat mit Ethylen und einem oder mehreren Acrylsäureestern.

7. Vernetzbare, in Wasser redispergierbare Polymerpulver-Zusammensetzungen nach Anspruch 1 bis 6, **dadurch gekennzeichnet, dass** 15 bis 75 Gew.-% Vinylesterpolymere enthalten sind, bezogen auf das Gesamtgewicht der vernetzbaren Polymerpulver-Zusammensetzungen.

8. Vernetzbare, in Wasser redispergierbare Polymerpulver-Zusammensetzungen nach Anspruch 1 bis 7, **dadurch gekennzeichnet, dass** die vernetzbaren, in Wasser redispergierbaren Polymerpulver-Zusammensetzungen Glasübergangstemperaturen Tg im Bereich von -40°C bis +20°C, bestimmt mittels Differential Scanning Calorimetry, aufweisen und das Diagramm zur Bestimmung der Glasübergangstemperatur Tg nur ein Maximum aufweist.

9. Verfahren zur Herstellung der vernetzbaren, in Wasser redispergierbaren Polymerpulver-Zusammensetzungen aus Anspruch 1 bis 8, indem ein oder mehrere Vinylester mittels radikalisch initiierter Emulsionspolymerisation oder Suspensionspolymerisation in Wasser polymerisiert werden und anschließend getrocknet wird, wobei vor oder während der Polymerisation oder vor oder während der Trocknung ≥ 51 Gew.-%, bezogen auf das Gesamtgewicht der Vinylester, Epoxid-Gruppen tragende Verbindungen zugegeben werden.

10. Verfahren zur Herstellung der vernetzbaren, in Wasser redispergierbaren Polymerpulver-Zusammensetzungen nach Anspruch 9, **dadurch gekennzeichnet, dass** ein oder mehrere Epoxid-Gruppen tragende Verbindungen ganz oder teilweise während oder nach einer Nachpolymerisation oder ganz oder teilweise nach Abschluss der Polymerisation oder ganz oder teilweise vor der Trocknung zugegeben werden.

11. Verwendung der vernetzbaren, in Wasser redispergierbaren Polymerpulver-Zusammensetzungen aus Anspruch 1 bis 8 in bauchemischen Produkten ausgewählt aus der Gruppe umfassend Fliesenkleber, Vollwärmeschutzkleber, Putze, Spachtelmassen, Wasserdampfsperren, Verlaufsmassen, Dichtschlämme, Fugenmörtel, Reparaturmörtel und Farben oder in Beschichtungs- oder Bindemitteln für gewebte und nichtgewebte Textilien und Papier.


**Claims**

1. Crosslinkable polymer powder compositions redispersible in water comprising

   one or more protective colloid-stabilized vinyl ester polymers,
   one or more compounds bearing epoxide groups and optionally one or more curing agents which crosslink with the compounds bearing epoxide groups, wherein
   the vinyl ester polymers do not comprise any epoxide-functional monomer units, and
   the crosslinkable polymer powder compositions redispersible in water comprise ≥ 51% by weight, based on the total weight of the vinyl ester polymers, of one or more compounds bearing epoxide groups, and
   mixtures of the protective colloid-stabilized vinyl ester polymers and the compounds bearing epoxide groups have glass transition temperatures Tg of -40°C to +20°C, determined by means of Differential Scanning Calorimetry.

2. Crosslinkable polymer powder compositions redispersible in water according to Claim 1, **characterized in that** one or more epoxy resins are present as compounds bearing epoxide groups.

3. Crosslinkable polymer powder compositions redispersible in water according to Claim 1 or 2, **characterized in that** 55 to 300% by weight of compounds bearing epoxide groups are present, based on the total weight of the vinyl ester polymers.

4. Crosslinkable polymer powder compositions redispersible in water according to Claims 1 to 3, **characterized in that** 20 to 75% by weight of compounds bearing epoxide groups are present, based on the total weight of the crosslinkable polymer powder compositions redispersible in water.

5. Crosslinkable polymer powder compositions redispersible in water according to Claims 1 to 4, **characterized in that** one or more vinyl ester polymers are based on ≥ 50% by weight of vinyl esters, based on the total weight of the vinyl ester polymers.

6. Crosslinkable polymer powder compositions redispersible in water according to Claims 1 to 5, **characterized in that** one or more vinyl ester polymers are selected from the group comprising vinyl ester homopolymers, copolymers of vinyl acetate with ethylene, copolymers of vinyl acetate with ethylene and one or more further vinyl esters, copolymers of one or more vinyl esters, vinyl chloride and ethylene and copolymers of vinyl acetate with ethylene and one or more acrylic esters.

7. Crosslinkable polymer powder compositions redispersible in water according to Claims 1 to 6, **characterized in that** 15 to 75% by weight of vinyl ester polymers are present, based on the total weight of the crosslinkable polymer powder compositions.

8. Crosslinkable polymer powder compositions redispersible in water according to Claims 1 to 7, **characterized in that** the crosslinkable polymer powder compositions redispersible in water have glass transition temperatures Tg in the range of -40°C to +20°C, determined by means of Differential Scanning Calorimetry, and the plot for determining the glass transition temperature Tg only has one maximum.

9. Process for producing the crosslinkable polymer powder compositions redispersible in water from Claims 1 to 8, by polymerizing one or more vinyl esters by means of free-radically initiated emulsion polymerization or suspension polymerization in water and then drying thereof,
wherein ≥ 51% by weight, based on the total weight of the vinyl esters, of compounds bearing epoxide groups are added before or during the polymerization or before or during drying.

10. Process for producing the crosslinkable polymer powder compositions redispersible in water according to Claim 9, **characterized in that** one or more compounds bearing epoxide groups are added wholly or partially during or after post-polymerization or wholly or partially after completion of the polymerization or wholly or partially before drying.

11. Use of the crosslinkable polymer powder compositions redispersible in water from Claims 1 to 8 in construction chemical products selected from the group comprising tile adhesives, integrated thermal insulation adhesives, renders, spackling compounds, steam barriers, leveling compounds, sealing slurries, jointing mortars, repair mortars and paints or in coatings or binders for woven and nonwoven textiles and paper.

**Revendications**

1. Compositions pulvérulentes polymères réticulables, redispersibles dans l'eau, contenant

   un ou plusieurs polymères d'esters vinyliques stabilisés par un colloïde protecteur,
   un ou plusieurs composés portant des groupes époxydes et éventuellement un ou plusieurs durcisseurs, réticulables avec les composés portant des groupes époxydes,
   les polymères d'esters vinyliques ne contenant aucun motif monomère à fonctionnalité époxyde, et
   les compositions pulvérulentes polymères réticulables, redispersibles dans l'eau, contenant ≥ 51 % en poids, par rapport au poids total des polymères d'esters vinyliques, d'un ou plusieurs composés portant des groupes époxydes, et
   les mélanges des polymères d'esters vinyliques stabilisés par un colloïde protecteur et des composés portant des groupes époxydes ayant des températures de transition vitreuse Tg de -40 °C à +20 °C, déterminées par analyse calorimétrique différentielle.

2. Compositions pulvérulentes polymères réticulables, redispersibles dans l'eau, selon la revendication 1, **caractérisées en ce qu'**elles contiennent, en tant que composés portant des groupes époxydes, une ou plusieurs résines époxydes.

3. Compositions pulvérulentes polymères réticulables, redispersibles dans l'eau, selon la revendication 1 ou 2, **caractérisées en ce qu'**elles contiennent 55 à 300 % en poids de composés portant des groupes époxydes, par rapport au poids total des polymères d'esters vinyliques.

4. Compositions pulvérulentes polymères réticulables, redispersibles dans l'eau, selon les revendications 1 à 3, **caractérisées en ce qu'**elles contiennent 20 à 75 % en poids de composés portant des groupes époxydes, par rapport au poids total des compositions pulvérulentes polymères réticulables, redispersibles dans l'eau.

5. Compositions pulvérulentes polymères réticulables, redispersibles dans l'eau, selon les revendications 1 à 4, **caractérisées en ce qu'**un ou plusieurs polymères d'esters vinyliques sont, à raison de ≥ 50 % en poids, à base d'esters vinyliques, par rapport au poids total des polymères d'esters vinyliques.

6. Compositions pulvérulentes polymères réticulables, redispersibles dans l'eau, selon les revendications 1 à 5, **caractérisées en ce qu'**un ou plusieurs polymères d'esters vinyliques sont choisis dans le groupe comprenant les homopolymères d'esters vinyliques, les copolymères d'acétate de vinyle et d'éthylène, les copolymères d'acétate de vinyle et d'éthylène et d'un ou plusieurs autres esters vinyliques, les copolymères d'un ou plusieurs esters vinyliques, de chlorure de vinyle et d'éthylène et les copolymères d'acétate de vinyle et d'éthylène et d'un ou plusieurs esters d'acide acrylique.

7. Compositions pulvérulentes polymères réticulables, redispersibles dans l'eau, selon les revendications 1 à 6, **ca-**

**ractérisées en ce qu'**elles contiennent 15 à 75 % en poids de polymères d'esters vinyliques, par rapport au poids total des compositions pulvérulentes polymères réticulables.

8. Compositions pulvérulentes polymères réticulables, redispersibles dans l'eau, selon les revendications 1 à 7, **caractérisées en ce que** les compositions pulvérulentes polymères réticulables, redispersibles dans l'eau, présentent des températures de transition vitreuse Tg dans la plage de -40 °C à +20 °C, déterminées par analyse calorimétrique différentielle, et que le diagramme destiné à déterminer la température de transition vitreuse Tg ne comprend qu'un maximum.

9. Procédé de fabrication de compositions pulvérulentes polymères réticulables, redispersibles dans l'eau, selon les revendications 1 à 8, dans lequel un ou plusieurs esters vinyliques sont, par polymérisation radicalaire en émulsion ou en suspension, polymérisés dans l'eau puis séchés, dans lequel, avant ou pendant la polymérisation ou avant ou pendant le séchage, on ajoute $\geq$ 51 % en poids, par rapport au poids total des esters vinyliques, de composés portant des groupes époxydes.

10. Procédé de fabrication de compositions pulvérulentes polymères réticulables, redispersibles dans l'eau, selon la revendication 9, **caractérisé en ce qu'**un ou plusieurs composés portant des groupes époxydes sont ajoutés en totalité ou en partie pendant ou après une post-polymérisation ou en totalité ou en partie après la fin de la polymérisation ou en totalité ou en partie avant le séchage.

11. Utilisation des compositions pulvérulentes polymères réticulables, redispersibles dans l'eau, selon les revendications 1 à 8 dans des produits de la chimie de la construction choisis dans le groupe consistant en les colles pour carrelage, les colles pour protection thermique complète, les enduits, les produits de rebouchage, les barrières de vapeur, les masses d'étalement, les masses de bouchage, les mortiers de jointoiement, les mortiers de réparation et les peintures ou dans les compositions de revêtement ou liants destinés à des textiles tissés et non tissés, et à du papier.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4028294 A
- US 4108819 A
- DE 2601200
- US 6235811 B1
- US 4690988 A
- US 20010024644 A
- EP 0896029 A1
- EP 723975 A
- EP 721004 A2
- WO 2010086217 A
- WO 2018220133 A